# FASCICULE DE BREVET EUROPEEN

(11) **EP 0 449 739 B1**
(45) Date de publication et mention de la délivrance du brevet: **27.04.1994**
(21) Numéro de dépôt: 91400855.2
(22) Date de dépôt: 29.03.1991
(51) Int. Cl.: F16H 61/28

(54) **Dispositif de commande motorisé de changement de rapport de transmission pour boîte de vitesses, en particulier pour véhicules automobiles**
Angetriebene Schalteinrichtung zum Schalten der Übersetzung eines Getriebes, insbesondere für Kraftfahrzeuge
Motorized control device for the changing of gear ratio in a gear box, in particular for automotive vehicles

(30) Priorité: 30.03.1990 FR 9004075
(43) Date de publication de la demande: 02.10.1991
(73) Titulaire: VALEO, 75848 Paris Cédex 17 (FR)
(72) Inventeur: Randriazanamparany, Vévé Roland, F-92500 Rueil Malmaison (FR); Lallemand, Jean-Paul, F-86280 Saint-Benoit (FR)
(74) Mandataire: Gamonal, Didier

(56) Documents cités:
- EP-A- 0 310 387
- DE-A- 2 331 647
- DE-A- 3 128 266
- FR-A- 2 632 038
- NL-A- 8 301 889

## Description

La présente invention concerne un dispositif de commande motorisé de changement de rapport de transmission pour boîte de vitesses à rapports étagés et point mort, notamment pour véhicules automobiles.

Elle a également pour objet un procédé de manoeuvre de ce dispositif.

Un tel dispositif est décrit dans le document FR-A-1 497 939.

Celui-ci divulgue une disposition comprenant un premier actionneur à moteur porté par une partie fixe, une timonerie comportant au moins en amont un élément d'entrée relié audit actionneur et entraîné par celui-ci et en aval un élément de sortie relié à un élément récepteur pour mise en action de moyens de passage et de sélection, que présente la boîte de vitesses pour changement de rapport de transmission. L'élément récepteur effectue un mouvement de translation et de rotation pour changement des rapports de la boîte de vitesses.

Un tel dispositif motorisé permet une automatisation et présente, par rapport au dispositif de commande manuelle, l'avantage de diminuer la transmission des bruits, les vibrations et les usures.

En outre les changements de rapports sont plus rapides.

Néanmoins ladite disposition présente l'inconvénient d'être relativement encombrante, du fait que l'actionneur entraîne un disque pourvu d'une rainure en spirale pour commander un levier récepteur et effectuer les divers changements de rapports.

Il en résulte en outre qu'il n'est pas possible par exemple de rétrograder directement de quatrième en deuxième, le profil de la rainure en spirale interdisant un tel changement direct.

De plus il n'est pas possible d'anticiper le changement de rapport.

Enfin la timonerie est relativement complexe et sujette aux coincements.

La présente invention a pour objet de pallier ces inconvénients et donc de créer, de manière simple et économique, un nouveau dispositif de commande motorisé permettant d'anticiper les changements de rapports, de rétrograder rapidement les vitesses, tout en simplifiant la timonerie et en procurant d'autres avantages.

Suivant l'invention un dispositif du type susindiqué est caractérisé en ce que l'élément de sortie de la timonerie est monté mobile en rotation et/ou en translation, par l'intermédiaire de l'élément récepteur formant avec celui-ci un équipage mobile, en ce que la timonerie est pourvue d'un agencement pour déplacer en rotation ou en translation son élément de sortie sous l'action du premier actionneur, en ce que l'élément de sortie est propre lors de son déplacement à intercepter et/ou à traverser des moyens de rampes mobiles, par l'intermédiaire d'un support fixe, et en ce qu'un second actionneur à moteur, porté par une partie fixe, est prévu pour entraîner, de manière discrète, lesdits moyens de rampes en étant reliés à ceux-ci, en sorte que lors d'un changement de rapport, l'élément de sortie puisse effectuer un mouvement continu en passant par une position correspondant à un point mort de la boîte de vitesses et que lesdits moyens de rampes puissent être déplacés par le second actionneur avant que l'élément de sortie passe par la position correspondant audit point mort en traversant et/ou en interceptant lesdits moyens de rampes.

Grâce à l'invention il est possible d'anticiper les changements de rapports en déplaçant par avance les moyens de rampes, qui favorisent une réduction de l'encombrement.

De préférence on déplace les moyens de rampes avant la mise en route du premier actionneur.

On appréciera qu'il est ainsi possible d'augmenter le nombre de niveaux de sélection sans modifications notables.

De plus la timonerie est simplifiée en étant moins sujette aux usures et aux coincements, et le changement des vitesses peut s'effectuer plus rapidement.

En outre les phénomènes de grippage sont minimisés du fait que la sélection, ou le passage suivant les cas, s'effectue par interception.

Avantageusement l'anticipation s'effectue en temps masqué lors de l'opération de débrayage.

Suivant une caractéristique importante, l'agencement de la timonerie comporte un élément intermédiaire déformable et doté d'un accumulateur d'énergie.

Grâce à cette disposition la phase de synchronisation, conduisant à un blocage du mouvement pendant un changement de rapport, s'effectue sans dommage.

Suivant une autre caractéristique l'élément de sortie de la timonerie est en deux parties avec formation d'un cardan.

Grâce à cette disposition, les mouvements de translation et/ou de rotation de l'élément de sortie s'effectuent de manière satisfaisante avec minimisation des efforts résistants.

Suivant une autre caractéristique, les moyens de rampes comportent des cames montées têche-bêche et avantageusement mobiles à l'encontre de moyens élastiques à tarage prédéterminé.

Cette disposition permet d'amortir les chocs entre lesdites cames et le levier de sortie, les ressorts étant calculés en conséquence.

En outre, la mobilité des cames facilite la sélection ou le passage.

En effet on est assuré par cette disposition que l'élément récepteur pourra effectuer un mouvement de translation et/ou de rotation correct.

Suivant une autre caractéristique l'élément de sortie comporte une extrémité en forme de losange propre à coopérer avec les cames à section en forme de trapèze.

Grâce à cette disposition les bruits et les usures sont encore diminués par la création de contact plan entre l'élément de sortie et les cames.

Bien entendu il est possible d'inverser la disposition, le levier portant alors les cames et les moyens de rampes le losange.

Suivant une autre caractéristique, pour la manoeuvre du dispositif de commande, des capteurs sont associés respectivement au premier actionneur et au deuxième actionneur ainsi qu'à l'élément intermédiaire de la transmission, lesdits capteurs envoyant des signaux à un bloc électronique central de calcul et de commande dont est pourvu le dispositif pour piloter les actionneurs.

Grâce au capteur de l'élément intermédiaire selon le procédé de manoeuvre du dispositif de commande, il est possible de bloquer le premier actionneur, après avoir effectué la course totale prédéterminée pour changer les vitesses, pendant l'opération de synchronisation et de crabotage; le capteur de l'élément intermédiaire détectant que ledit élément est revenu à sa position initiale, avec un temps de sécurité, et donc que le crabotage est effectué.

Le premier actionneur effectue ainsi un mouvement continu en ignorant l'arrêt lors de la synchronisation par déformation de l'élément intermédiaire.

Cet actionneur effectue donc par avance la course nécessaire pour engager une vitesse.

La description qui va suivre illustre l'invention en référence aux dessins annexés dans lesquels :
- la figure 1 est une vue schématique en perspective d'une boîte de vitesses équipée du dispositif de commande suivant l'invention;
- la figure 2 est une vue schématique d'une grille de changement de vitesses;
- la figure 3 est une vue partielle en perspective montrant les moyens de rampes selon l'invention ainsi que l'extrémité de l'élément de sortie;
- la figure 4 est une vue schématique en perspective montrant les moyens de rampes et l'élément de sortie de la timonerie avec son élément récepteur pour une première réalisation selon l'invention;
- la figure 5 est une vue partielle montrant l'extrémité de l'élément récepteur associé à des coulisseaux de commande de la boîte de vitesses;
- la figure 6 est une vue montrant l'arrière de la boîte de vitesses avec la timonerie de commande selon un second exemple de réalisation de l'invention;
- la figure 7 est une vue partielle montrant le capteur associé à l'élément intermédiaire de la transmission;
- la figure 8 est une vue selon la flèche VIII de la figure 7;
- la figure 9 est une vue de dessous selon la flèche IX de la figure 6;
- la figure 10 est une vue latérale montrant l'élément d'entrée de la timonerie;
- la figure 11 est une vue selon la flèche XI de la figure 10;
- la figure 12 est une vue montrant la plaque de détection associée à l'élément d'entrée;
- la figure 13 est une vue en coupe axiale montrant l'élément intermédiaire de la timonerie;
- les figures 14 et 15 sont des vues en coupe axiale montrant des composants de l'élément intermédiaire de la timonerie;
- la figure 16 est une vue de l'axe que comporte l'élément intermédiaire de la timonerie;
- la figure 17 est une vue en perspective de la potence de support de l'élément intermédiaire de la timonerie;
- les figures 18 et 19 sont respectivement des vues latérales et de face montrant la chape porteuse de l'élément intermédiaire de la timonerie et associée, à la potence de support dudit élément intermédiaire;
- la figure 20 est une vue selon la flèche XX de la figure 6;
- la figure 21 montre le levier de passage que comporte l'élément de sortie de la timonerie;
- la figure 22 est une vue selon la flèche F de la figure 21;
- la figure 23 montre l'axe associé au levier de passage de l'élément de sortie de la timonerie;
- la figure 24 montre le levier de sélection que comporte l'élément de sortie de la timonerie;
- la figure 25 est une vue selon la ligne A-A de la figure 24;
- la figure 26 est une vue selon la flèche G de la figure 24;
- la figure 27 est une vue en coupe partielle des moyens de rampes de la deuxième réalisation, selon la ligne A-A de la figure 28;
- la figure 28 est une vue partielle en coupe selon la ligne B-B de la figure 27;
- la figure 29 est une vue selon la flèche H de la figure 27;
- la figure 30 est une vue d'une des cames que comportent les moyens de rampes pour une troisième réalisation;
- la figure 31 est une vue selon la flèche I de la figure 30;
- la figure 32 est une vue partielle en perspective des moyens de rampes et de leur support pour une quatrième réalisation;
- la figure 33 est une vue de la vis de manoeuvre des moyens de rampes;
- la figure 34 est une vue du noyau porte-came;
- la figure 35 est une vue selon la flèche K de la figure 34;
- la figure 36 est une vue d'une des plaques de fermeture des moyens de rampes;
- la figure 37 est une vue analogue à la figure 35 et montrant les moyens de support et de guidage complémentaires associés aux moyens de rampes;
- les figures 38 et 39 sont des vues analogues à la figure 8, montrant les capteurs à effet Hall associés respectivement à l'élément d'entrée et au noyau porte-cames.

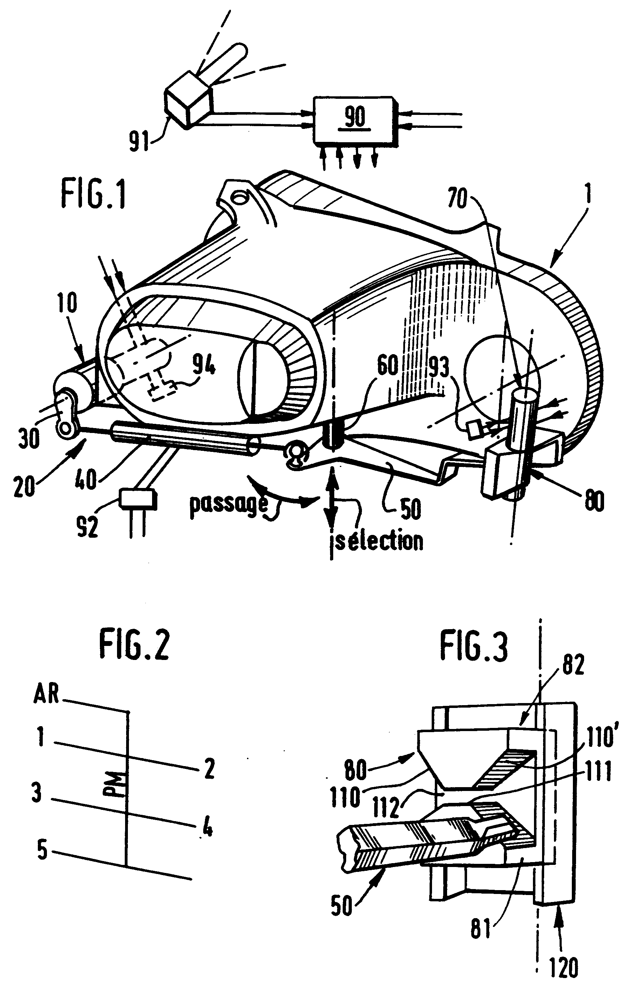

A la figure 1, on voit en 1 le contour d'une boîte de vitesses à rapports étagés et point mort pour véhicules automobiles, ladite boîte présentant des moyens de changement de rapport de transmission comportant des moyens de passage et de sélection pour changement de rapport de transmission.

Ici cette boîte est à cinq vitesses et on a représenté schématiquement à la figure 2 sa grille, sachant que le passage, par exemple, de la première à la deuxième vitesse s'effectue grâce aux moyens de passage, et le changement de niveau entre, par exemple, la deuxième vitesse et la quatrième vitesse s'effectue grâce aux moyens de sélection, avec une ligne de point mort représenté par PM.

Le dispositif de commande comporte un premier actionneur 10 à moteur porté par une partie fixe, une timonerie 20 comportant en amont un élément d'entrée 30 relié audit actionneur 10 en étant propre à être entraîné par celui-ci et en aval un élément de sortie 50 relié à un élément récepteur 60 de mise en action des moyens de changement de rapport de transmission et donc des moyens de passage et/ou de sélection.

Suivant l'invention l'élément de sortie 50 de la timonerie 20 est monté mobile en translation et/ou en rotation par l'intermédiaire de l'élément récepteur 60, en formant avec celui-ci un équipage mobile.

La timonerie 20 est pourvue d'un agencement 30,40,100,103 pour actionner et donc déplacer en rotation ou en translation son élément de sortie 50 sous l'action du premier actionneur 10.

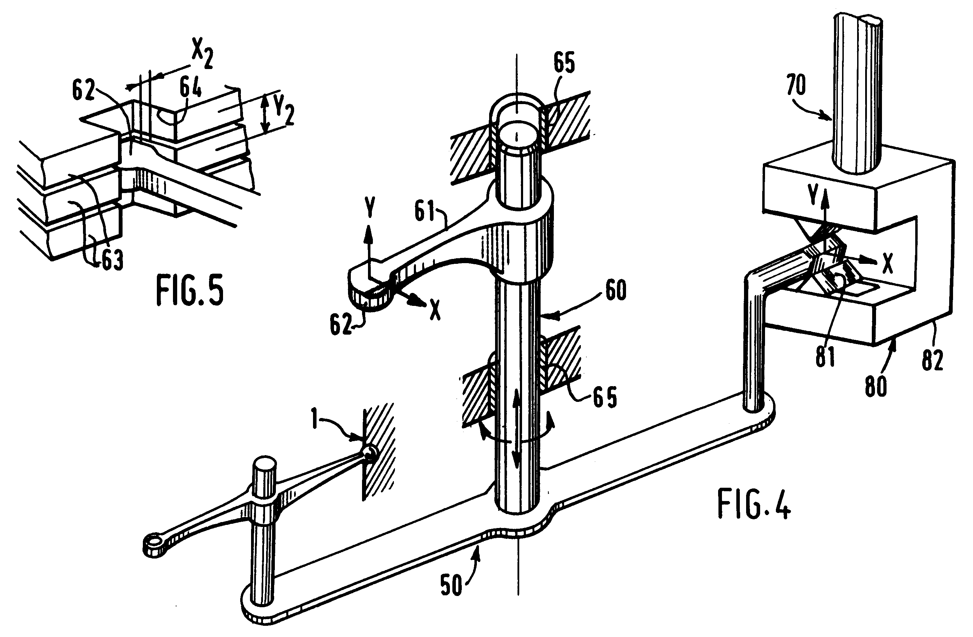

L'élément de sortie 50 (figure 3) est propre lors de son déplacement à intercepter et/ou à traverser des moyens de rampes 80 mobiles, par l'intermédiaire d'un support fixe 120.

Un second actionneur 70 à moteur porté par une partie fixe est prévu pour entraîner, de manière discrète, lesdits moyens de rampes 80 en étant relié à ceux-ci.

Par "de manière discrète" on entend ici que lesdits moyens 80 peuvent occuper plusieurs positions stables distinctes.

De même par traversée, on entend ici que l'élément 50 est admis à passer de part et d'autre des moyens 80 sans contact avec ceux-ci, tandis que, lors d'une interception, il y a contact avec les moyens de rampe. L'actionnement de l'élément de sortie 50 par l'agencement entraîne un déplacement en rotation ou translation de celui-ci.

Grâce à cela, lors d'un changement de rapport, l'élément de sortie 50 peut effectuer un mouvement continu en passant par la position correspondant à un point mort de la boîte de vitesses et les moyens de rampes 80 peuvent être déplacés par avance par le deuxième actionneur 70 (ici un actionneur de sélection) avant que l'élément de sortie 50 passe par la position correspondant audit point mort en traversant et/ou en interceptant lesdits moyens de rampes.

Avantageusement on déplace lesdits moyens 80 avant la mise en route du premier actionneur 10 (ici un actionneur de passage).

Plus précisément ici les moyens de rampes 80 (figures 3,4,32) comportent deux cames 81 montées tête-bêche l'une par rapport à l'autre et à distance l'une de l'autre pour définir un canal de traversée 112 (figure 3), déterminé selon les applications par la taille de l'élément de sortie 50 devant le traverser.

Ces cames 81 appartiennent à un bloc 82 monté mobile ici en translation, grâce à un support 120 en forme de glissière à la figure 3, l'agencement entraînant en rotation l'élément de sortie.

Chaque came 81 a en section globalement la forme d'un trapèze avec deux parties symétriques inclinées en sens inverse 110,110' se raccordant à une portion centrale plate 111.

Pour manoeuvre de l'élément de sortie 50, sous forme de levier de commande unique à la figure 1, la timonerie 20 présente un élément intermédiaire 40 monté à articulation à l'une de ses extrémités sur l'élément 30 pour attaquer par son autre extrémité le levier de commande 50.

Ce levier 50 est attelé à fixation à l'élément récepteur ici un arbre 60 de commande de la boîte de vitesses comportant au moins un doigt de commande 61 et appartenant aux moyens de passage et/ou de sélection.

L'arbre 60 a donc globalement la forme d'un valet de menuiserie (figure 4) et peut se déplacer en translation et/ou rotation suivant respectivement les flèches Y et X de la figure 4.

Le doigt 61 (figures 4 et 5) est propre à coopérer avec des coulisseaux 63 associés chacun à un ensemble synchroniseurs-crabots, lesdits coulisseaux 63 présentant des rainures 64 pour coopération, à jeu X2 avec définition d'une zone de point mort, avec l'extrémité arrondie 62 du doigt 61. Pour les positions de point mort le doigt de commande 61 peut se déplacer en translation d'une rainure 64 à l'autre, tandis que lors du passage de la première à la deuxième vitesse, par exemple, le doigt 61 est admis à effectuer une rotation en arc de cercle.

Ici par simplicité on n'a représenté que trois coulisseaux 63, dont les rainures 64 sont dans l'alignement les unes des autres au point mort.

Ici le passage des vitesses s'effectue par rotation de l'arbre 60 et la sélection des vitesses par translation de l'arbre 60.

Bien entendu la disposition inverse est possible, le passage des vitesses s'effectuant par translation de l'arbre 60 et la sélection des vitesses par rotation de l'arbre 60, la grille de la figure 2 étant alors tournée de 90°, les cames 81 et le bloc 82 effectuant de manière discrète une rotation en arc de cercle. Dans ce cas, le premier actionneur déplace en translation l'arbre 60, les coulisseaux 63 étant par exemple tournées à 90°, comme les cames 81 de la figure 4.

Pour plus de précision sur ledit ensemble synchroniseurs-crabots, on se reportera par exemple au document FR-A-2 609 138.

Pour mémoire on notera que durant l'opération de synchronisation, le mouvement dudit ensemble est bloqué (à cause des cônes de synchronisation) jusqu'à ce que la synchronisation soit effectuée et qu'ensuite se produise le crabotage des pignons concernés.

Ce document montre également schématiquement les pignons et les arbres d'une telle boîte de vitesses, dont l'arbre d'entrée ou primaire est entraîné en rotation par un disque de friction lié en rotation audit arbre par une liaison à cannelure.

Ce disque présente des garnitures propres à être serrées entre un plateau de réaction et un plateau de pression que présente usuellement un embrayage, lesdits plateaux étant solidaires en rotation de l'arbre moteur.

Ce serrage s'effectue à l'aide de moyens élastiques, tel un diaphragme, prenant appui sur un couvercle solidaire en rotation du plateau de pression, le débrayage de l'embrayage (disque de friction non serré) étant réalisé à l'aide d'une butée de débrayage agissant sur le diaphragme, ladite butée étant soumise à l'action d'une fourchette de débrayage.

Cette fourchette peut être commandée par un vérin de débrayage, comme décrit dans le document FR-A-2 609 138, ou en variante appartenir à un actionneur à moteur électrique, réducteur et ressort compensateur montés dans un même boîtier comme décrit dans la revue "Ingénieurs de l'Automobile" Octobre 1984.

On notera que l'arbre 60 est guidé à translation et à rotation par des douilles 65, portées par la boîte de vitesses, lesdites douilles 65 étant coaxiales à l'axe de l'arbre 60, en sorte que celui-ci peut effectuer un mouvement de translation et/ou de rotation dans les deux sens (figure 4) par rapport à sondit axe.

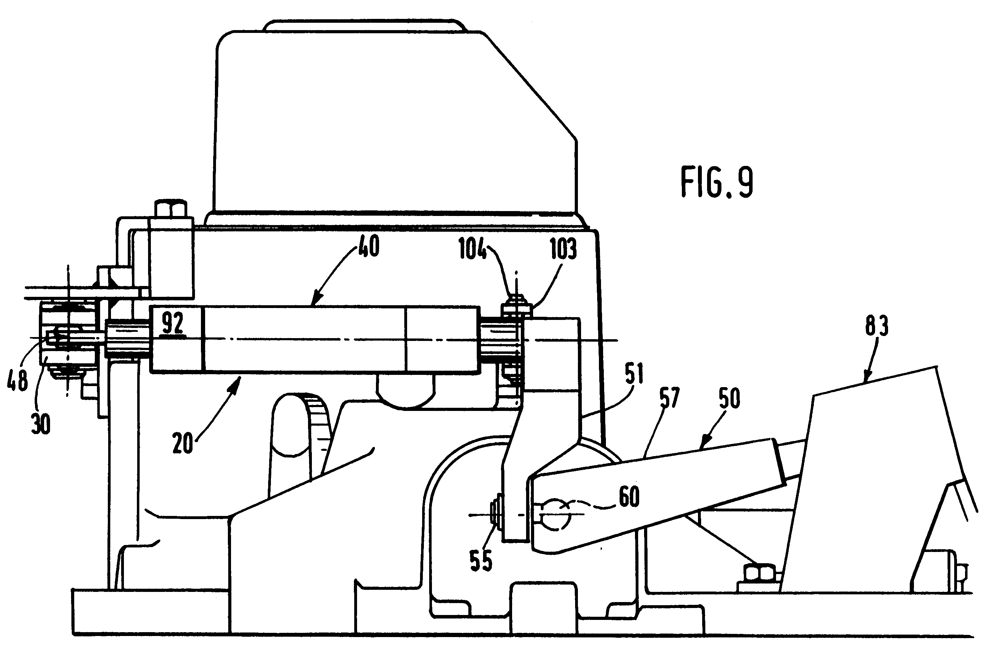

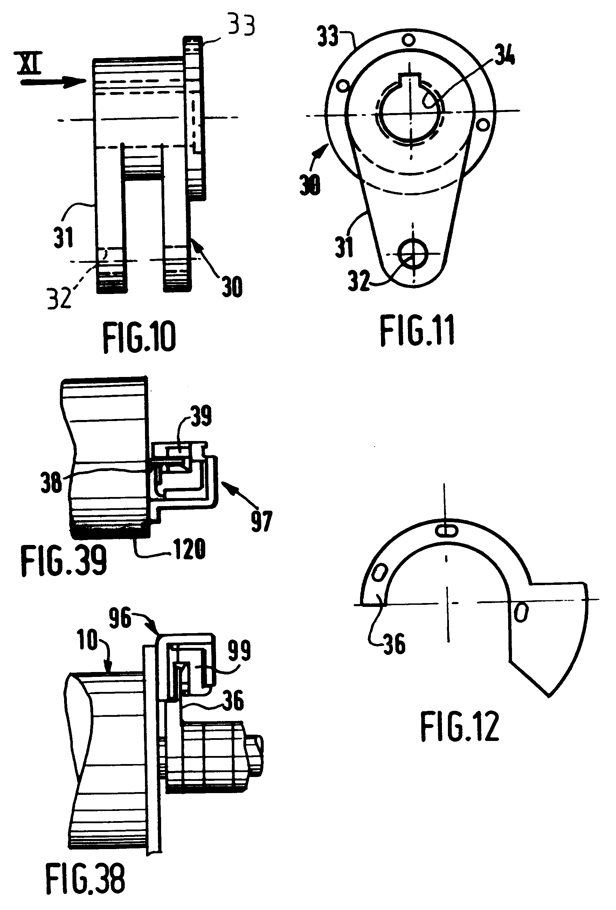

L'élément d'entrée 30 (figure 10) est en forme de chape et comporte deux manivelles 31 et une bride 33 ainsi qu'un trou 34 avec une rainure de logement d'une clavette. Chaque manivelle 31 est doté d'un trou 32, lesdits trous 32 étant en correspondance l'un avec l'autre pour passage d'un axe (figure 9).

Par sa bride 33 l'élément 30 est propre à porter une plaque 36 réglable circonférentiellement grâce à des lumières (figure 12). Par son trou 34, cet élément 30 est propre à être entraîné en rotation par l'élément de sortie de l'actionneur 10 comportant une clavette pour coopération avec la rainure du trou 34.

Cet élément 30 est également lié axialement audit élément de sortie, en sorte que l'élément 30 est attelé à l'élément de sortie de l'actionneur 10.

L'agencement de la timonerie 20 comporte un élément intermédiaire déformable 40 et doté d'un accumulateur d'énergie 44, pour éviter tout dommage lors de la synchronisation des pignons concernés et permettre un mouvement continu de l'actionneur 10.

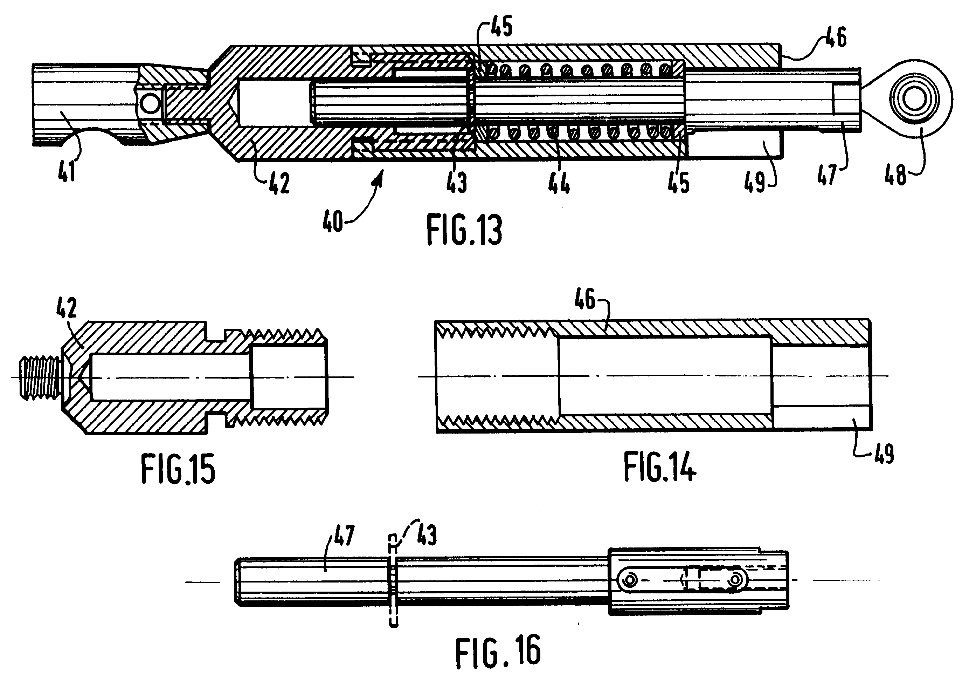

Cet élément 40 (figures 13-16) possède un embout à rotule 48, pour montage à articulation sur l'élément d'entrée 30, ledit embout 48 pénétrant entre les deux manivelles 31 et étant relié à celles-ci, grâce à un axe (visible à la figure 9) pénétrant dans les trous 32 des manivelles 31.

Cet embout 48 est solidaire d'un axe 47 monté en translation à l'intérieur d'un corps 42,46 en deux parties 42,46 alésées intérieurement et reliées l'une à l'autre grâce à des dents de la partie 46 pénétrant dans une rainure annulaire de la partie 42.

Ainsi l'élément 40 comporte deux pièces 42,46-47 en relation de cylindre piston, l'axe 47 étant calé en rotation par coopération de forme, à la faveur d'une rainure 49, que présente la partie 46, ledit axe présentant une saillie pénétrant dans ladite rainure 49.

Ces pièces sont mobiles l'une par rapport à l'autre à l'encontre de moyens élastiques 44 calés ici axialement, d'une part sur le cylindre 42,46, et d'autre part, sur le piston 47.

Plus précisément l'axe 47 présente un changement de diamètre pour formation d'un épaulement et porte par sa partie de diamètre réduit un anneau d'arrêt 43, tandis que la partie 46 est épaulée. Les moyens élastiques 44 s'étendent axialement, en entourant l'axe 47, entre deux anneaux 45 calés axialement, d'une part sur ledit épaulement de la partie 46, et d'autre part sur l'extrémité libre de la partie 42. Ces anneaux 45 sont interposés entre l'anneau 43 et l'épaulement de l'axe 47.

La distance entre l'anneau 43, monté coulissant à l'intérieur de l'alésage interne de la partie 42, et l'épaulement de l'arbre 47 correspondant à la distance entre les deux anneaux 45 avec montage des moyens élastiques 44, ici un ressort à boudin travaillant à compression, sous précontrainte, ledit anneau 43 permettant d'assujettir axialement l'axe 47 aux anneaux 45 et au ressort 44.

Ainsi pour un effort prédéterminé, le ressort 44 est admis à être comprimé entre les anneaux 45 pendant la synchronisation des pignons concernés, l'axe 47 se déplaçant par rapport au cylindre 42,46 à l'encontre de l'action exercée par le ressort 44.

Le ressort 44 est admis ensuite à se détendre pour permettre le crabotage.

Le mouvement de translation de l'axe 47 est ensuite transformé en mouvement de rotation pour l'arbre 60 et l'élément 50.

Ainsi, à la figure 4, cet élément 40 est propre à attaquer un levier en T, solidaire de l'élément 50 par sa partie verticale, et monté à articulation sur le carter de la boîte de vitesses par l'une de ses ailes, tandis que l'autre aile est attaquée par l'élément 40.

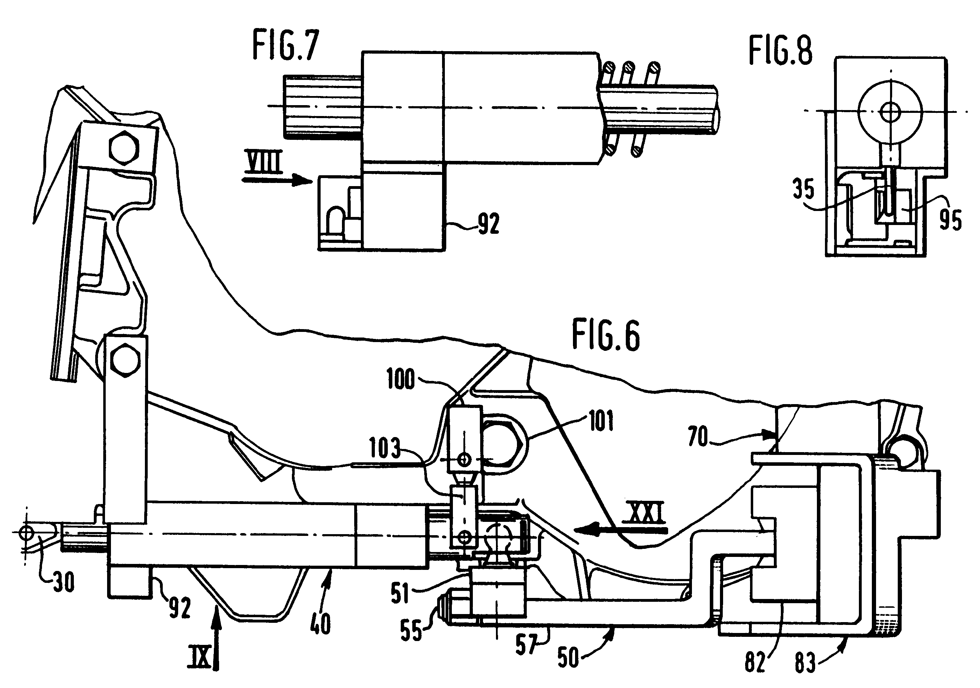

Dans les figures 6 et 13, la partie 42 porte un embout à rotule 41 relié à l'élément 50 et l'élément 40 est monté à articulation sur une chape 103 portée par une potence 100 montée sur une partie fixe.

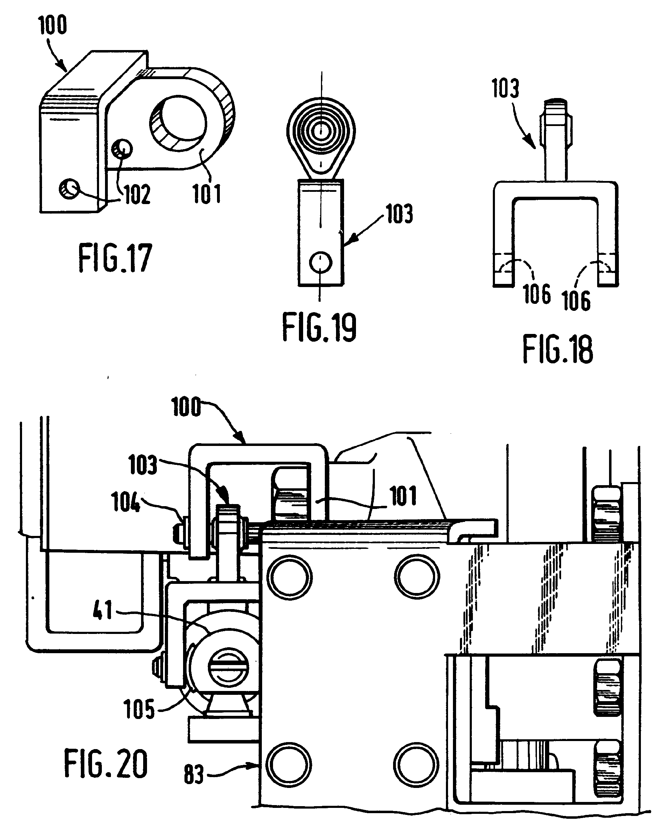

Plus précisément (figures 17 à 20), la potence 100 a une forme de U dont les branches sont trouées en 102, pour montage à articulation de la branche centrale, dotée de préférence d'une rotule, de la chape 103 insérée dans ladite potence, un axe 104 traversant les trous 102 et ladite rotule.

L'une des branches de la potence 100 présente une oreille 101 protubérante pour fixation au carter de la boîte de vitesses par vissage (figure 6).

La chape 103 présente dans sa partie basse un U, qui porte, à la faveur de trous 106, deux berceaux 105 diamétralement opposés, en forme de secteur annulaire, pour montage de l'embout 41 ayant extérieurement une portion de forme cylindrique.

L'actionneur 10 est avantageusement solidaire du carter de la boîte de vitesses, en sorte que l'élément d'entrée 30, l'élément intermédiaire 40, la chape 103 forment les trois côtés d'un parallélogramme déformable et donc un agencement permettant de déplacer en rotation l'élément de sortie 50 sous l'action de l'actionneur 10.

En variante le déplacement en rotation peut être réalisé par un dispositif à engrenages entraîné par le premier actionneur 10 avec un pignon 12 en deux parties mobiles l'une par rapport à l'autre à l'encontre d'un ressort spiral taré comme le ressort 44.

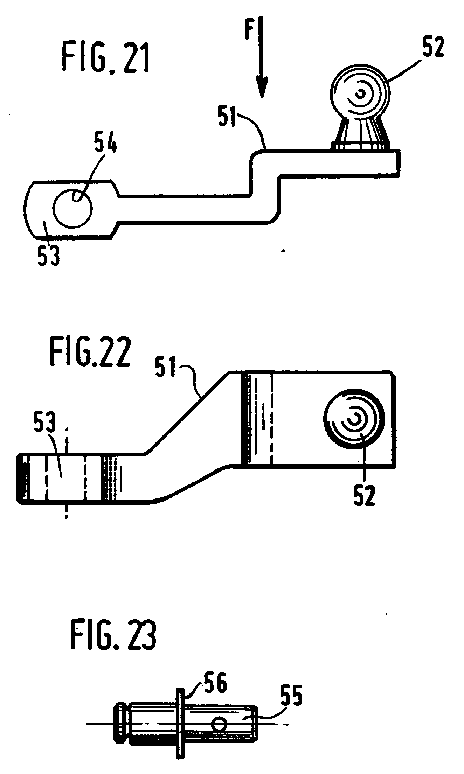

Dans le mode de réalisation de la figure 6, l'élément 50 comporte deux leviers 57,51 (figures 21 à 26) articulés l'un sur l'autre et reliés à l'élément 40 par une liaison à rotule, en sorte de former un cardan.

Le levier 51 présente à l'une de ses extrémités une tête 52 avec une calotte sphérique, pour montage dans l'embout 41, et à l'autre 53 de ses extrémités une surépaisseur dotée d'un trou 54.

Ce levier 51 est coudé et un axe 55 avec un anneau d'arrêt 56 est propre à s'engager dans ledit trou 54, l'anneau 56 venant buter contre le levier 51 et dépassant du trou, pour liaison axiale avec ledit levier 51, l'axe 55 portant à cet effet une rainure pour montage d'un circlips d'arrêt (figure 9) et étant troué pour passage d'une goupille décrite ci-après.

L'axe 55 s'engage dans un trou 58 pratiqué dans l'une des extrémités du deuxième levier 57.

Cette dite extrémité porte un manchon de guidage 58' rapporté par soudage sur le levier 57.

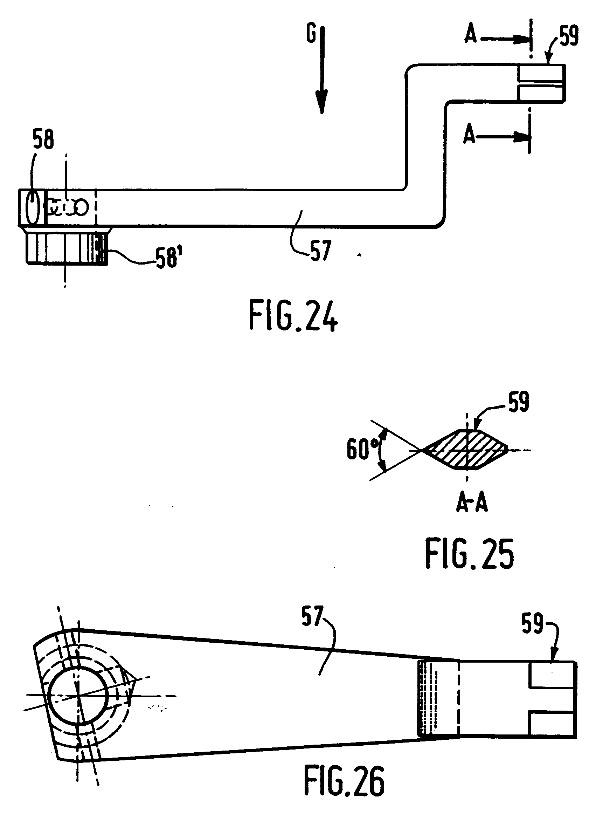

Ce manchon 58' est alésé comme la partie correspondante du levier 57, pour montage sur l'arbre 60 et liaison à celui-ci, par exemple, par goupillage (les trous de passage de la goupille étant visibles aux figures 24 et 26).

Le levier 57 est également coudé, ce qui lui procure une certaine élasticité, et présente en surélévation une deuxième extrémité 59, en forme de losange dont les pointes sont arrondies (figure 25).

Cette extrémité 59 est propre à coopérer avec les cames 81.

Ce sont les portions inclinées du losange qui sont propres à coopérer avec les portions 110,110' des cames 81 (figure 3), tandis que les parties planes sont propres à coopérer avec les portions 111.

Ainsi les zones de contact sont maximum, ce qui permet de diminuer les bruits, la portion 111 diminuant notablement les usures.

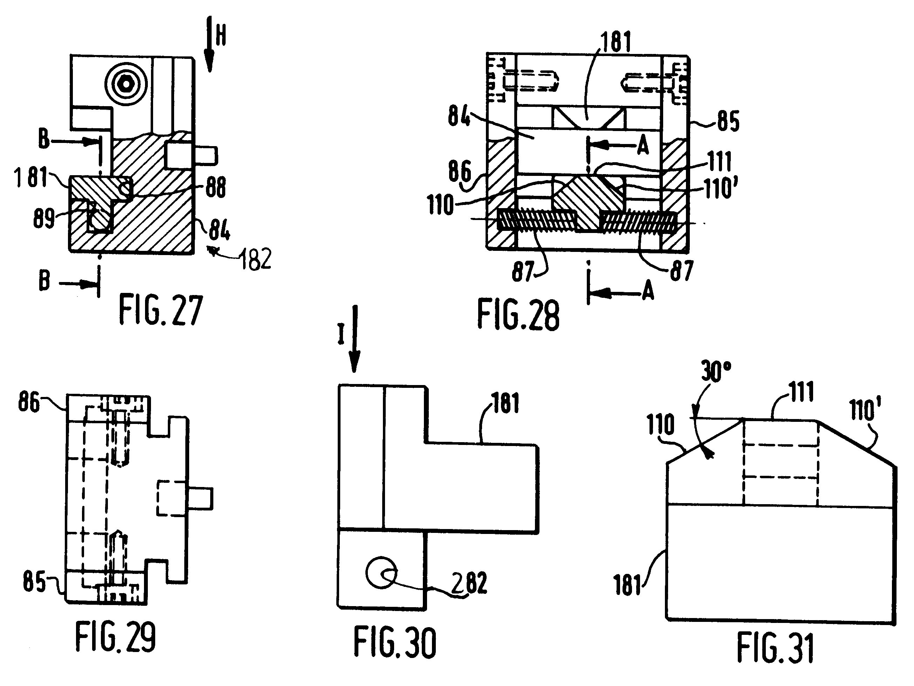

Alors que dans la figure 3, les cames sont monoblocs avec le bloc 82, dans les figures 27 à 37, les cames 181 sont mobiles à l'encontre de moyens élastiques 87, ce qui permet d'amortir les chocs, les ressorts 87 étant tarés en conséquence.

On appréciera que la mobilité des cames permet à l'extrémité 59 d'effectuer un mouvement de translation, lors d'une sélection.

En effet, compte tenu du jeu X2 de la figure 5, on est sûr que l'extrémité 62 passera d'une rainure 64 à l'autre en toute certitude.

Dans ces figures, le bloc 182 en forme de U comporte un noyau porte-cames 84 avec des rainures longitudinales 88,89 fermées latéralement par des plaques de fermeture 85,86 solidaires du noyau 84, ici par vissage (figures 28 et 29).

Ces plaques 85,86 sont biseautées et comportent des empreintes pour logement de l'extrémité des moyens 87 sous forme de ressorts à boudin.

Chaque came 181 (figure 27) a en section une forme de T, dont la partie verticale est engagée dans la rainure 89, et dont les ailes sont respectivement en contact avec le noyau 84 et engagées dans la rainure 88.

Par symétrie deux rainures 88 et deux rainures 89 sont ainsi prévues dans le noyau 84.

Les ressorts 87 sont disposés de part et d'autre de la came 181 concernée et s'appuient sur ladite portion verticale de celle-ci, en étant engagés dans la rainure 89.

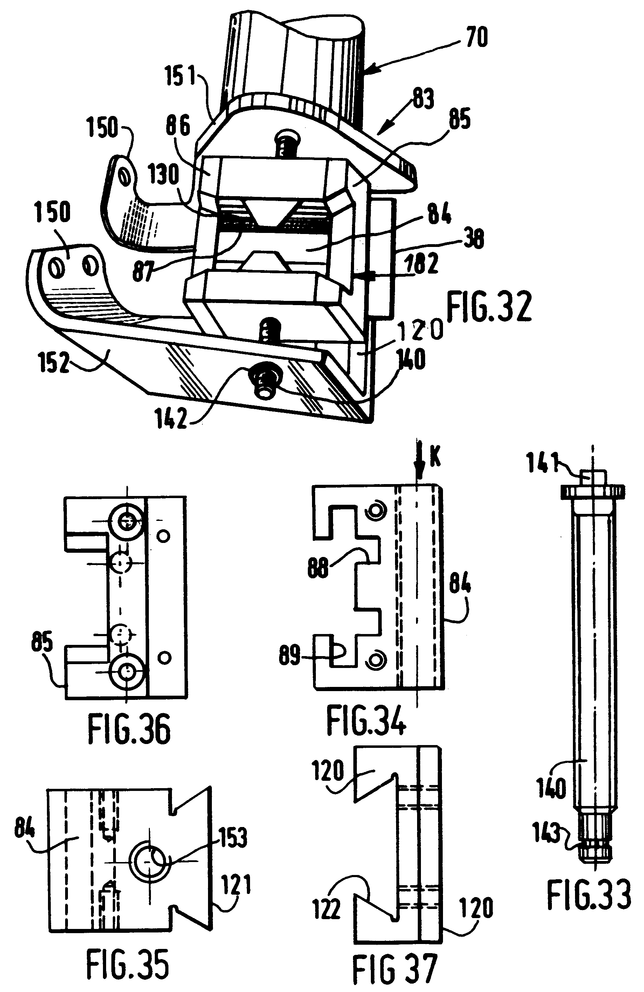

Le noyau 84 (figure 29) présente à sa base latéralement deux rainures, pour coopération avec des saillies complémentaires solidaires du support 120 (figure 32).

Grâce à cette disposition le noyau 84 est admis à se déplacer en translation en étant guidé par ledit support.

Avantageusement (figures 35 et 37), au lieu de rainures de type rectangulaire (figure 29), un assemblage du type queue d'aronde est réalisé.

Avantageusement également pour éviter un flambage des ressorts 87, une tige 130 est engagée à l'intérieur des ressorts 87, ladite tige traversant la came 181 grâce à un trou 282 (figure 30), que présente ladite came 181.

Le support 120 est fixé, par exemple, par vissage, (des trous taraudés étant prévus à cet effet dans ledit support figure 35) sur une pièce 83.

Cette pièce 83 est pourvue d'oreilles de fixation 150 au carter de la boîte de vitesses et présente des joues 151,152 traversées par une vis d'entraînement 140.

La joue 151 sert à la fixation du deuxième actionneur 70, par exemple par vissage, dont l'élément de sortie est propre à entraîner la tête 141 de la vis 140, dont l'autre extrémité 143 traverse la joue 152 et présente une rainure pour montage d'une bague d'arrêt 142.

La vis coopère avec un trou fileté 153 (figure 37) prévu dans le porte-cames 84.

Il y a ainsi formation d'un bloc manipulable et transportable 70-182-120-83-140, le noyau 84 étant disposé axialement à jeu entre les joues 151,152.

Le premier et le deuxième actionneurs 10,70 peuvent être de la même nature que celui décrit dans le susmentionné brevet FR-A-1 497 939 avec un moteur électrique et un dispositif d'entraînement à engrenage qui sont ici portés par le carter de la boîte de vitesses.

Ceci permet à l'aide de capteurs 94 et 93 (figure 1), associés respectivement à l'actionneur 10 et à l'actionneur 70, de compter le nombre de tours qu'effectuent lesdits moteurs électriques.

Lesdits capteurs envoient des signaux à un bloc électronique central de calcul et de commande 90, dont est pourvu le dispositif, pour piloter lesdits actionneurs.

Un autre capteur 92 est associé à l'élément intermédiaire 40.

Ce capteur 92 est un capteur à effet Hall et comporte un drapeau 35, solidaire de l'axe 47 et traversant la rainure 49, ainsi qu'une fourche 95, portée par le cylindre 42,46 et propre à être traversée par le drapeau 35 (figures 7,8).

Ce capteur permet de détecter les mouvements au sein de l'élément 40 et envoie une information correspondante au bloc 90.

Des capteurs à effet Hall 96,97 (non représentés par simplicité dans les figures précédentes) sont associés également respectivement à l'élément 30 et au support 120.

Le capteur 96 comporte la plaque 36 (figure 12) ainsi qu'une fourche 99 (figure 38), comme le capteur de la figure 8.

Le capteur 97 comporte une plaque 38 (figure 32) solidaire du noyau 84, ainsi qu'une fourche 39 solidaire du support 120 (figure 39).

Ces capteurs 96,97 sont des capteurs d'initialisation et permettent de savoir, notamment lorsque le véhicule est immobilisé, le rapport engagé, les capteurs 93,94 travaillant par incrémentation.

Il est donc possible de localiser le doigt de commande 61 et de positionner lesdits actionneurs 10,70 à une position bien définie au point mort.

Ainsi à l'aide du capteur 94 suivant le procédé de commande selon l'invention, il est possible de faire tourner le moteur, pour que la timonerie 20 effectue un mouvement prédéterminé correspondant à la course nécessaire pour engager une vitesse, puis de bloquer le moteur avec un temps de sécurité pour permettre la synchronisation, le capteur 92 détectant le passage de la plaque 35 lorsque le ressort 44 se détend et donnant l'ordre au bloc 90 d'arrêter l'actionneur 10 avec un temps de sécurité.

Ainsi on est sûr que le crabotage est effectué sans qu'il y ait des réactions néfastes dans la timonerie 20 et dans l'actionneur 10.

Ce bloc 90 reçoit les informations d'un commutateur 91, à la disposition de l'usager.

Ce commutateur 91 remplace le levier de changement de vitesses manuel et consiste, par exemple, en un commutateur à commande impulsionnelle, utilisé sur les véhicules de haut de gamme, pour commander le poste de radio.

Ainsi en déplaçant la manette du commutateur 91 vers la gauche de la figure 1, il est possible d'envoyer des impulsions successives correspondantes à un ordre de passage croissant des vitesses, tandis qu'en déplaçant ladite manette vers la droite de la figure 1, on envoie des impulsions successives correspondantes à un ordre de passage décroissant des vitesses.

Tous ces dispositifs fonctionnent de la manière suivante:
- à l'aide du commutateur 91, le conducteur envoie un ordre au bloc 90 qui commande la mise en route de l'actionneur 10, lequel par l'élément 30 et l'élément 40 déplace en rotation le levier 50;
- dans le cas où l'on veut seulement effectuer une opération de passage (première-deuxième, troisième-quatrième, marche arrière ou vice versa), le levier 50 effectue une rotation grâce à l'élément 40 et à l'arbre 60 (le coulisseau 63 effectuant alors un mouvement de translation), le mouvement de l'actionneur 10 étant arrêté au bout d'un certain nombre de tours, grâce au capteur 94 envoyant alors une information au bloc 90.

Durant cette phase le levier 50 traverse le canal 112 des moyens de rampes 80 qui sont alors fixes.

Si l'on veut effectuer par exemple un passage de deuxième en troisième, l'actionneur 10 est mis en route, comme précédemment, mais avantageusement pendant l'opération de débrayage, on effectue un déplacement en translation anticipée des moyens de rampes 80, avant mise en route de l'actionneur 10, le bloc 90 envoyant alors un ordre de mise en route du deuxième actionneur 70, puis le levier 57 pivotant, celui-ci est admis à intercepter, pour une position correspondante à la position point mort du doigt 61, la came 81 concernée, lors de son mouvement de rotation et à effectuer un mouvement de translation amorti et peu bruyant, par coopération de l'extrémité 59 avec les portions 110',111 concernées, l'arbre 60 effectuant alors un mouvement de translation (Y2 à la figure 5) pour passer d'un coulisseau 63 à l'autre, grâce aux rainures 64, pour la position correspondante à un point mort de la boîte de vitesses. Ensuite, le coulisseau 63 concerné est déplacé en translation, le levier 57 passant de part et d'autre des moyens de came.

Le mouvement de l'actionneur 70 est arrêté au bout d'un certain nombre de tours déterminé par le capteur 93.

Si l'on veut passer de troisième en deuxième, on effectue un mouvement de rotation en sens inverse du levier 50, celui-ci coopérant avec la face 110 de l'autre came 81.

Il est également possible de passer directement de quatrième en deuxième.

Ainsi qu'on l'aura compris la came du bas permet un mouvement de sélection en montée des vitesses, tandis que la came du haut permet un mouvement de sélection en descente des vitesses.

Bien entendu le mouvement en translation des moyens de rampes 80 est déterminé selon les applications en fonction de la distance que doit effectuer le doigt 61 pour passer d'un coulisseau 63 à l'autre.

Durant la synchronisation des pignons de la boîte, l'élément 40 se déforme alors, puis se détend pour effectuer l'opération de crabotage, le tout sous la surveillance des capteurs 92,94.

Ainsi qu'il ressort à l'évidence de la description et des dessins, le dispositif de commande selon l'invention, d'une part, permet de bien épouser le contour du carter de la boîte de vitesses, l'élément 40 étant disposé au niveau de la partie basse de ladite boîte (figures 1,6,9), et d'autre part, se prête bien à une utilisation avec un embrayage selon les susmentionnés documents FR-A-2 609 138 et Ingénieurs de l'Automobile, le déplacement des moyens 80 s'effectuant pendant l'opération de débrayage/embrayage, en sorte que le dispositif est très rapide.

Les deux actionneurs 10,70 sont disposés perpendiculairement dans les réalisations décrites, mais d'autres positions sont envisageables.

Bien entendu la présente invention n'est pas limitée aux exemples de réalisation décrits, en particulier on peut utiliser des capteurs 93,94 sous forme de potentiomètres.

Au lieu du commutateur 91, on peut utiliser un bouton ou analogue.

De même les actionneurs, au lieu d'être à moteur électrique peuvent être à moteur hydraulique.

Bien entendu il est possible d'inverser les structures, ainsi l'extrémité 59 en forme de losange peut appartenir aux moyens de rampes 80, tandis que le levier 50 peut présenter les deux cames 81.

De même le ressort 44 peut être un bloc en matériau élastomère ou être un ressort spirale, l'axe 47 effectuant alors un mouvement de rotation relatif par rapport aux parties 42,46.

Comme support fixe, on peut utiliser un autre élément que le carter de la boîte de vitesses.

Dans le cas de boîte de vitesses où la sélection des rapports est effectuée par rotation de l'élément récepteur 60 et le passage par translation, un dispositif analogue à celui décrit peut être utilisé.

Les rampes et le bloc se déplaçant en rotation de manière discrète agissent alors pour commander la rotation de l'élément 60 par interception de l'élément de sortie 50 lors d'une translation correspondant à un passage.

Le rôle des actionneurs devient symétrique par rapport aux réalisations décrites ci-dessus, le premier actionneur déplaçant en translation l'élément de sortie, grâce à un agencement de la timonerie.

## Revendications

1. Dispositif de commande motorisé de changement de rapport de transmission pour boîte de vitesses à rapports étagés et point mort, notamment pour véhicules automobiles, comprenant un premier actionneur à moteur (10), porté par une partie fixe, une timonerie (20) comportant au moins en amont un élément d'entrée (30), relié audit actionneur (10) et entraîné par celui-ci, et en aval un élément de sortie (50) relié à un élément récepteur (60) de mise en action de moyens de passage et de sélection, que présente la boîte de vitesses pour changement de rapport de transmission, caractérisé en ce que l'élément de sortie (50) de la timonerie est monté mobile en rotation et en translation, par l'intermédiaire de l'élément récepteur (60) formant avec celui-ci un équipage mobile, en ce que la timonerie (20) est pourvue d'un agencement (30,40,100,103) pour déplacer en rotation ou en translation son élément de sortie (50) sous l'action dudit premier actionneur (10), en ce que l'élément de sortie (50) est propre lors de son déplacement à intercepter et/ou à traverser des moyens de rampes (80) mobiles, par l'intermédiaire d'un support fixe (120), et en ce qu'un second actionneur (70) à moteur, porté par une partie fixe, est prévu pour entraîner, de manière discrète, lesdits moyens de rampes (80) en étant relié à ceux-ci, en sorte que lors d'un changement de rapport, l'élément de sortie (50) puisse effectuer un mouvement continu en passant par la position correspondante à un point mort de la boîte de vitesses et que lesdits moyens de rampes puissent être déplacés par le second actionneur (70) avant que l'élément de sortie (50) passe par la position correspondante audit point mort en traversant et/ou en interceptant lesdits moyens de rampes (80).

2. Dispositif selon la revendication 1, caractérisé en ce que l'élément récepteur (60) est un arbre de commande des moyens de passage et de sélection de la boîte de vitesses.

3. Dispositif selon la revendication 1 ou 2, caractérisé en ce que ledit agencement de la timonerie (20) comporte un élément intermédiaire (40) déformable et doté d'un accumulateur d'énergie (44), et en ce que ledit élément (40) est monté à articulation sur l'élément d'entrée (30).

4. Dispositif selon la revendication 3, caractérisé en ce que ledit élément intermédiaire comporte, pour entraîner en rotation l'élément de sortie (50), deux pièces (42,46-47) en relation de cylindres pistons, mobiles l'une par rapport à l'autre à l'encontre de moyens élastiques (44) calés axialement, d'une part, sur le cylindre (42,46), et d'autre part, sur le piston (47).

5. Dispositif selon la revendication 4, caractérisé en ce que l'élément intermédiaire (40) est monté à articulation, d'une part, sur une chape (103) portée par une potence (100) montée sur une partie fixe, et d'autre part, sur une manivelle (31) appartenant à l'élément d'entrée (30), en sorte que l'élément d'entrée (30), l'élément intermédiaire (40), la chape (103) forment les trois côtés d'un parallélogramme déformable.

6. Dispositif selon l'une quelconque des revendications 1 à 5, caractérisé en ce que l'un des éléments de sortie (50)-moyens de rampes (80) comporte deux cames (81) montées tête-bêche l'une par rapport à l'autre et définissant entre elles un canal de traversée (112).

7. Dispositif selon la revendication 6, caractérisé en ce que lesdites cames (81) sont montées mobiles à translation à l'encontre de moyens élastiques (87), à tarage prédéterminé, s'étendant de part et d'autre de ladite came, lesdites cames (81) et lesdits ressorts (87) étant montés dans des rainures (88,89) d'un noyau porte-cames (84).

8. Dispositif selon la revendication 6 ou 7, caractérisé en ce que lesdites cames (81) ont en section une forme de trapèze avec deux parties (110,110') inclinées en sens inverse s'étendant de part et d'autre d'une partie plane (111) à laquelle elle se raccorde.

9. Dispositif selon la revendication 8, caractérisé en ce que l'autre des éléments de sortie (50)-moyens de rampes (80) comporte une extrémité (50) en forme de losange propre à coopérer avec les parties inclinées (110,110') et planes (111) des cames (81).

10. Dispositif selon l'une quelconque des revendications précédentes, caractérisé en ce que l'élément de sortie (50) comporte deux leviers (57,51) articulés l'un sur l'autre et reliés à l'élément intermédiaire (40) par une liaison à rotule, l'un desdits leviers comportant une extrémité en forme de losange propre à coopérer avec les moyens de rampes (80).

11. Procédé de manoeuvre d'un dispositif selon l'une quelconque des revendications 3 à 10, caractérisé en ce que partant de capteurs (94,93,92) associés respectivement au premier actionneur (10), au deuxième actionneur (70) et à l'élément intermédiaire (40), lesdits capteurs envoyant des signaux à un bloc électronique central de calcul et de commande (90), dont est pourvu le dispositif pour piloter lesdits actionneurs, on actionne le premier actionneur (10) pour effectuer un mouvement déterminé, correspondant à la course nécessaire pour engager une vitesse, sous le contrôle de son capteur associé (94), puis on bloque ledit premier actionneur (10) avec un temps de sécurité, sous le contrôle du capteur de position (92) de l'élément intermédiaire pour permettre la synchronisation.

## Patentansprüche

1. Angetriebene Schalteinrichtung zum Schalten der Übersetzung eines Getriebes mit abgestuften Gängen und Totpunkt, insbesondere für Kraftfahrzeuge, enthaltend eine erste Motorantriebsvorrichtung (10), die auf einem festen Teil aufliegt, ein Gestänge (20) mit oberhalb wenigstens einem Eingangselement (30), welches mit der genannten Antriebsvorrichtung (10) verbunden ist und von dieser angetrieben wird, und unterhalb mit einem Ausgangselement (50), welches mit einem Aufnahmeelement (60) für die Betätigung von Schalt- und Umschaltmitteln verbunden ist, die das Getriebe für das Umschalten der Gänge aufweist, **dadurch** **gekennzeichnet**, daß das Ausgangselement (50) des Gestänges mit Hilfe des Aufnahmeelements (60), welches damit eine bewegliche Einheit bildet, drehbeweglich und translatorisch eingebaut ist, daß das Gestänge (20) mit einer Anordnung (30, 40, 100, 103) für die Drehbewegung oder translatorische Bewegung des Ausgangselements (50) unter Einwirkung der genannten ersten Antriebsvorrichtung (10) versehen ist, daß das Ausgangselement (50) bei seiner Verschiebung mit Hilfe einer festen Stütze (120) in bewegliche Rampenmittel (80) eingreifen und/oder durch diese hindurchtreten kann, und daß eine zweite Motorantriebsvorrichtung (70), die auf einem festen Teil aufliegt, vorgesehen ist, um auf diskrete Weise die genannten Rampenmittel (80) anzutreiben und damit verbunden zu sein, so daß beim Umschalten eines Ganges das Ausgangselement (50) eine kontinuierliche Bewegung über die entsprechende Stellung zu einem Totpunkt ausführen kann und daß die genannten Rampenmittel durch die zweite Antriebsvorrichtung (70) verschoben werden können, bevor das Ausgangselement (50) die entsprechende Stellung zum genannten Totpunkt durchläuft und dabei durch die genannten Rampenmittel (80) hindurchtritt und/oder in diese eingreift.

2. Einrichtung nach Anspruch 1, **dadurch** **gekennzeichnet**, daß das Aufnahmeelement (60) eine Antriebswelle für die Getriebe-Umschalt- und Wahlmittel ist.

3. Einrichtung nach Anspruch 1 oder 2, **da****durch gekennzeichnet**, daß die genannte Anordnung des Gestänges (20) ein verformbares und mit einem Energiespeicher (44) versehenes Zwischenelement (40) aufweist und daß das genannte Element (40) gelenkig am Eingangselement (30) angebracht ist.

4. Einrichtung nach Anspruch 3, **dadurch** **gekennzeichnet**, daß das genannte Zwischenelement für den Drehantrieb des Ausgangselements (50) zwei Teile (42, 46-47) im Verhältnis Zylinder-Kolben aufweist, die im Verhältnis zueinander gegen elastische Mittel (44) beweglich sind, welche axial einerseits am Zylinder (42, 46) und andererseits am Kolben (47) verkeilt sind.

5. Einrichtung nach Anspruch 4, **dadurch** **gekennzeichnet**, daß das Zwischenelement (40) gelenkig einerseits an einer Kappe (103) angebracht ist, die auf einem am feststehenden Teil befestigten Ausleger (100) ruht, und andererseits an einer Kurbel (31), die zu dem Eingangselement (30) gehört, so daß das Eingangselement (30), das Zwischenelement (40), die Kappe (103) die drei Seiten eines verformbaren Parallelogramms bilden.

6. Einrichtung nach einem der Ansprüche 1 bis 5, **dadurch gekennzeichnet**, daß eines der Ausgangselemente (50) - Rampenmittel (80) zwei Nocken (81) aufweist, die im Verhältnis zueinander umgekehrt angeordnet sind und zwischen denen ein Durchtrittskanal (112) liegt.

7. Einrichtung nach Anspruch 6, **dadurch** **gekennzeichnet**, daß die genannten Nocken (81) für translatorische Bewegung gegen elastische Mittel (87) einer festgelegten Eichung angebracht sind, die sich beiderseits des genannten Nockens erstrecken, wobei die genannten Nocken (81) und die genannten Federn (87) in Nuten (88, 89) eines Nockenträgerkerns (84) angebracht sind.

8. Einrichtung nach Anspruch 6 oder 7, **da****durch gekennzeichnet**, daß die genannten Nocken (81) einen trapezförmigen Querschnitt mit zwei Teilen (110, 110') haben, die in umgekehrter Richtung geneigt sind und sich beiderseits eines flachen Teils (111), woran sie angeschlossen ist, erstrecken.

9. Einrichtung nach Anspruch 8, **dadurch** **gekennzeichnet,** daß das andere der Ausgangselemente (50) - Rampenmittel (80) ein rautenförmiges Ende (50) aufweist, welches geeignet ist, mit den geneigten Teilen (110, 110') und flachen Teilen (111) der Nocken (81) zusammenzuwirken.

10. Einrichtung nach einem der vorherigen Ansprüche, **dadurch gekennzeichnet**, daß das Ausgangselement (50) zwei Hebel (57, 51) aufweist, die gelenkig aneinander angebracht und mit dem Zwischenelement (40) über ein Kugelgelenk verbunden sind, wobei einer der genannten Hebel ein rautenförmiges Ende besitzt, welches mit den Rampenmitteln (80) zusammenwirken kann.

11. Verfahren zur Betätigung einer Einrichtung nach einem der Ansprüche 3 bis 10, **dadurch** **gekennzeichnet**, daß, ausgehend von Gebern (94, 93, 92), die mit der ersten Antriebsvorrichtung (10), der zweiten Antriebsvorrichtung (70) bzw. dem Zwischenelement (40) verbunden sind, die genannten Geber Signale an einen zentralen elektronischen Berechnungs- und Steuerblock (90) senden, mit dem die Einrichtung versehen ist, um die genannten Antriebsvorrichtungen vorzusteuern, und daß die erste Antriebsvorrichtung (10) betätigt wird, um eine bestimmte Bewegung auszuführen, die dem zum Einlegen eines Gangs erforderlichen Hubweg unter der Kontrolle des zugehörigen Gebers (94) entspricht, daß anschließend die genannte erste Antriebsvorrichtung (10) mit einer Sicherheitszeit und unter Kontrolle des Weggebers (92) des Zwischenelements blockiert wird, um die Synchronisation zu ermöglichen.

## Claims

1. A motorised gear shift control apparatus for a transmission gearbox having fixed gear ratios and a neutral position, especially for motor vehicles, comprising a first motorised actuator (10), carried by a fixed part, a linkage (20) comprising at least on the driving side an input element (30) coupled to the said actuator (10) and driven by the latter, and on the driven side an output element (50) coupled to a receptor element (60) for actuating gear shift and selection means, which are provided in the gearbox for changing the transmission ratio, characterised in that the output element (50) of the linkage is mounted so as to be movable in rotation and in translation by the receptor element (60), constituting with the latter a movable unit, and in that the linkage (20) is provided with means (30, 40, 100, 103) for displacing its output element (50) in rotation or in translation under the action of the said first actuator (10), in that the output element (50) is adapted so as, during its displacement, to intercept and/or to traverse ramp means (80) which are movable in a fixed support (120), and in that a second motorised actuator (70), carried by a fixed part, is provided so as to drive the said ramp means (80) in a stepwise manner, being connected to the latter, so that, during a gear change, the output element (50) can perform a continuous movement by passing through the position corresponding to a neutral position of the gearbox, and so that the said ramp means can be displaced by the second actuator (70) before the output element (50) passes through the position corresponding to the said neutral position while traversing and/or intercepting the said ramp means (80).

2. Apparatus according to Claim 1, characterised in that the receptor element (60) is a control rod for the gear shift and selection means of the gearbox.

3. Apparatus according to Claim 1 or Claim 2, characterised in that the said means of the linkage (20) includes an intermediate element (40) which is deformable and which has an energy accumulator (44) and in that the said element (40) is articulated on the input element (30).

4. Apparatus according to Claim 3, characterised in that that the said intermediate element includes, for the purpose of driving the output element (50) in rotation, two members (42, 46-47) in a cylinder and piston relationship, which are movable with respect to each other against the action of axially mounted resilient means (44), firstly on the cylinder (42, 46) and secondly on the piston (47).

5. Apparatus according to Claim 4, characterised in that the intermediate element (40) is articulated, firstly on a yoke (103) carried by a support hanger (100) mounted on a fixed part, and secondly, on a crank (31) of the input element (30), so that the input element (30), the intermediate element (40) and the yoke (103) define the three sides of a deformable parallelogram.

6. Apparatus according to any one of Claims 1 to 5, characterised in that one of the elements comprising the output element (50) and ramp means (80) includes two cams (81) mounted in head-to-toe relationship and defining a traverse channel (112) between them.

7. Apparatus according to Claim 6, characterised in that the said cams (81) are mounted for translational movement against the action of resilient means (87) having a predetermined loading and extending on either side of the said cam, the said cams (81) and the said springs (87) being mounted in grooves (88, 89) of a cam-carrying core (84).

8. Apparatus according to Claim 6 or Claim 7, characterised in that the said cams (81) have a cross section in the form of a trapezium having two portions (110, 110') which are inclined in opposite directions and which extend on either side of a flat portion (111) to which it is joined.

9. Apparatus according to Claim 8, characterised in that the other one of the elements comprising the output element (50) and ramp means (80) has an end portion (50) in the form of a lozenge adapted to cooperate with the inclined portion (110, 110') and flat portions (111) of the cams (81).

10. Apparatus according to any one of the preceding Claims, characterised in that the output element (50) comprises two levers (57, 51) which are articulated on each other and which are coupled to the intermediate element (40) through a ball joint, one of the said levers having an end portion in the form of a lozenge adapted to cooperate with the ramp means (80).

11. A method of manoeuvring an apparatus in accordance with any one of Claims 3 to 10, characterised in that, starting from sensors (94, 93, 92) which are associated with the first actuator (10), the second actuator (70) and the intermediate element (40) respectively, the said sensors transmitting signals to a central electronic computing and control unit (90) with which the apparatus is provided for controlling the said actuators, the first actuator (10) is energised so as to carry out a predetermined movement corresponding to the course of travel necessary for engaging one speed, under the control of its associated sensor (94), and the said first actuator (10) is then inhibited for a safety period, under the control of the position sensor (92) for the intermediate element, so as to provide synchronisation.
